# EUROPEAN PATENT SPECIFICATION

(11) **EP 0 644 467 B1**
(45) Date of publication and mention of the grant of the patent: **08.10.1997**
(21) Application number: 94114787.8
(22) Date of filing: 20.09.1994
(51) Int. Cl.: G03G 15/16, C08L 81/02, B29C 45/00

(54) **Photo-sensitive cylindrical organic body for electrophotography and manufacturing method thereof**
Lichtempfindlicher zylindrischer Körper aus organischem Material für die Elektrophotographie und Verfahren zu seiner Herstellung
Corps photosensible et cylindrique de matière organique et une méthode pour sa production

(30) Priority: 21.09.1993 JP 233974/93
(43) Date of publication of application: 22.03.1995
(73) Proprietor: FUJI ELECTRIC CO. LTD., Kawasaki 210 (JP)
(72) Inventor: Kawata, Noriaki, c/o Fuji Electric Co., Ltd., Kanagawa Pref., Kawasaki 210 (JP); Hikima, Kiyoshi, c/o Fuji Electric Co., Ltd., Kanagawa Pref., Kawasaki 210 (JP)
(74) Representative: May, Hans Ulrich, Dr.

(56) References cited:
- DE-A- 3 935 140
- US-A- 4 645 327
- "Polyphenylensulfide", Römpp-Chemie-Lexikon, 9th ed., 1992, 3563-4

## Description

The present invention relates to an organic photo-sensitive body for electrophotography, and, in particular, to a conductive cylindrical supporting body therefor. This invention also relates to a manufacturing method of the conductive cylindrical supporting body.

### [Prior Art]

A photo-sensitive body of electrophotography that is used for an electrophotography device such as a copier or printer to which electrophotography technology is applied comprises a conductive supporting body and a photo-sensitive layer provided thereon and consisting of an organic material containing an organic photoconductive material. The conductive supporting body is usually cylindrical for the convenience of the design of the device, and the photo-sensitive layer is coated and formed on its outer surface.

Conventional materials for the cylindrical supporting body use aluminum or its alloy that has a relatively light weight and a good machinability.

However, Japanese Patent Examined Publication No. 2-17026 discloses a supporting body manufactured by an injection-molding method using a material containing a polyphenylenesulfide resin (simply referred to as PPS below) as a main component, the supporting body that has a light weight and good chemical and thermal resistance, is not oxidized or otherwise deteriorated in the air, and is thus preferable for an organic photo-sensitive body.

### [Problems to Be Solved by the Invention]

Supporting bodies composed of aluminum or its alloy require individual high accuracy machining to obtain a rigid dimensional accuracy (+50µm or less in roundness and +40µm in the accuracy of diameter) and a preferable surface roughness (1µm or less at the max. height (Rₘₐₓ)), and also require individual machining of a spigot into which a flange for rotatably driving a photo-sensitive body is fitted; have a disadvantage that the surface is oxidized or deteriorated due to the effect of moisture or oxygen in the air; require to prevent deterioration, for example, by forming an anodic oxidized coat on the surface; and thus require many steps and costs in manufacturing process.

Supporting bodies composed of PPS resin as a main component have the following disadvantages. Since the volume resistivity of a PPS resin is high, that is, usually 10¹⁰ to 10¹³ Ω cm, a carbon black is added to the PPS resin to provide conductivity. The market has recently been making demands on image quality and printing characteristics. Investigations into the conductivity of supporting bodies required to obtain as good image quality and printing characteristics as required in practical use, have revealed that the volume resistivity should be 10⁴ Ω cm or less and that a higher volume resistivity prevents the removal of electric charges from the supporting body when the photo-sensitive body is exposed or static electricity is eliminated from the sensitive body, resulting in an increase in residual potential, thereby preventing good images or printed characters from being obtained. The volume resistivity of a furnace carbon, which is usually used as a conductive carbon black, is 1 to 10 Ω cm, and more than 20 wt.% carbon black must be added to provide the supporting body with a volume resistivity of 10⁴ Ω cm. However, addition of such a large quantity of carbon black increases the viscosity of the material, making injection-molding difficult. Supporting bodies of a small diameter (about 30 mm or less in outer diameter), a small thickness (about 3 mm or less), and a large length (several hundred mm) which have recently been demanded are very difficult to be made by injection-molding. In addition, such supporting bodies have a reduced mechanical strength. Thinner and longer supporting bodies with dimensional accuracy are more difficult to provide. Supporting bodies composed of an ordinary linear-type PPS resin as a main component are affected by a slight deformation that is caused by a solution of coating liquid or heating during coating and formation of an organic material layer on the supporting body, making the dimensional accuracy required for the supporting body difficult to obtain. In addition, the good chemical resistance of PPS resins prevents the adhesion of an organic material layer to the surface of the resin during coating and formation, causing frequent release of the photo-sensitive layer during the use of the sensitive body, thereby resulting in a short effective life.

In view of the above points, it is an first object of this invention to provide an organic photo-sensitive body with a cylindrical supporting body that has a light weight, a preferable conductivity, and good chemical and thermal resistance, can maintain dimensional accuracy despite its thin and long shape, and is not oxidized nor deteriorated in the air to maintain a stable quality. It is a second object of this invention to provide an organic photo-sensitive body with a cylindrical supporting body that has an adequate and uniform surface roughness. It is a third object of this invention to provide an organic photo-sensitive body with a cylindrical supporting body that has mechanical strength large enough to prevent deformation despite its thin and long shape. It is a fourth object of this invention to provide an organic photo-sensitive body with a cylindrical supporting body to which an organic material layer can adhere sufficiently during coating and formation. It is the fifth object of this invention to provide an efficient manufacturing method of cylindrical supporting bodies, in particular, those with a small thickness and diameter and a large length, as described in the first, second, and third objects.

Means for solving the problems are defined in the appended claims.

Table 1 shows the chemical resistance of both crosslinked-type and linear-type PPS resins evaluated in terms of changes in mass (%) after immersion in acetone, methylene chloride, and dichloroethane respectively for 24 hours using cylindrical molded products composed of the respective resins, and their thermal resistance evaluated in terms of changes in diametral and longitudinal dimensions (%) after heating at 120 °C for 48 hours.

**Table 1**

| Properties | Linear-type PPS resin | Crosslinked-type PPS resin |
|---|---|---|
| Chemical resistance (changes in mass after immersion for 24 hours (%)) | | |
| acetone | + 0.05 | 0 |
| methylene chloride | + 12.42 | + 0.13 |
| dichloroethane | + 3.40 | 0 |

| Thermal resistance (changes in dimensions 48 hours after heating at 120°C (%)) | | |
|---|---|---|
| diametral direction | 0.67 | - 0.01 |
| longitudinal direction | - 1.20 | 0 |

As is apparent from Table 1, the crosslinked-type PPS resin is superior to the linear-type PPS resin in terms of both chemical and thermal resistance. The formation of a supporting body with a crosslinked-type PPS resin as a main component reduces swelling caused by the thermal deformation of the supporting body or a solution of coating iiquid during the coating and formation of an organic material layer such as a photo-sensitive layer, also reduces the deformation of the supporting body, and provides practically sufficient dimensional accuracy even for photo-sensitive body using a supporting body of a small thickness and diameter and a large length.

The addition of a highly conductive carbon black of 10⁻¹ Ω cm in volume resistivity. for example, a highly conductive carbon black or a more highly conductive channel black into a material containing a crosslinked-type PPS resin as a main component in order to apply conductivity to the material, reduces to 20 wt.% or less the quantity of carbon black to be added to the supporting body to reduce its volume resistivity to 10⁴ Ω cm or less, and possibly keeps the viscosity of the supporting body material low enough to allow the supporting body to be injection-molded despite its small diameter and thickness and large length; for example, the melt flow rate (MFR) can be maintained within a range of 20 g/10 min. to 50 g/10 min. at 300°C.

Of course, the carbon black is preferably dispersed uniformly in the supporting body material To do this, a dispersing agent is desirably added to the material; applicable dispersing agents include a calcium carbonate and clay. Although the quantity of dispersing agent to be added depends on the quantity of carbon black to be added, it should be 10 to 30 wt.% of the supporting body material. Less than 10 wt.% of dispersing agent has no effects, while more than 30 wt.% of dispersing agent is not preferable due to its adverse effect on the conductivity of the material.

Although the surface roughness of the supporting body depends upon the surface roughness of the inner surface of the cavity mold of the metal mold, it is affected greatly by the particle size of the carbon black. A carbon black 20 to 50 nm in average particle diameter enables the surface roughness of the supporting body to be within a range of 0.5 to 1.2 µm at R_{max.}

The addition of glass fibers to the supporting body compensates for a decrease in mechanical strength caused by the addition of a carbon black, providing strength of 0.49 x 10⁸ N/m² or more required for a supporting body about 1 mm in thickness. The glass fiber preferably has a diameter of 20 µm and a length of 3 mm. Although the quantity of glass fibers to be added depends on the quantity of carbon black to be added, it should be 10 to 30 wt.% of the supporting body material. Less than 10 wt.% of glass fibers have no effects, while more than 30 wt.% of glass fibers are not preferable due to its adverse effect on the conductivity of the material and the surface roughness of the supporting body.

As described above, the supporting body is a crosslinked-type PPS resin to which a carbon black, a carbon black dispersing agent, and glass fibers are added; provision of at least 40 wt.% or more of resin allows it to function effectively without losing its character.

A disadvantage of the PPS resin is its low adhesion. In the electronics- and automobile-related field in which PPS resins are used as engineering plastics, methods for irradiating the surface with ultraviolet rays or inducing corona discharge thereon to modifiy the surface to improve adhesion have been known (The Adhesion Society of Japan 31st Annual Convention (June, 1993): Improvement of PPS Adhesion; Journal of The Adhesion Society of Japan Vol. 29, No. 4 (1993): Improvement of Surfaces Using Ultraviolet Rays). However, it has been unknown whether or not these methods can be used effectively without degrading the functions of the supporting body if a crosslinked-type PPS resin is used as a functional material for the supporting material of sensitive body. The inventors discovered that irradiation with ultraviolet rays of 180 to 255 nm in wavelength causes ozone to be generated from oxygen in the air due to ultraviolet energy to cut molecular chains on the utmost surface of the crosslinked-type PPS resin and to generate a -OH and a -COOH group due to the additional effect of moisture in the air to activate the surface, thereby substantially improve the wettability and adhesion of the surface. Corona discharge energy also causes ozone to be generated to produce effects similar to those in irradiation with ultraviolet rays.

The supporting body for a sensitive body in accordance with this invention is made by injection-molding a material containing a crosslinked-type PPS resin as a main component to which a carbon black, a carbon black dispersing agent, and glass fibers are added. A supporting body with required shape and surface roughness can be manufactured accurately and efficiently by integrally forming a metal mold with an adequate structure under adequate molding conditions. This obviates the need of individual surface-roughness-machining and other machining processes required when an aluminum alloy is used to manufacture a supporting body

Heating the metal mold within a range of 120 to 150°C during injection-molding; heating the molding material within a range of 280 to 330°C; applying sufficient injection pressure; and completing filling of a material in 0.05 to 2.5 second allow the material filling to be completed before the resin starts to be solidified within the cavity (material-filled section) to provide a well-shaped supporting body, and cause the resin to be crystallized sufficiently to enable the crosslinked-type PPS resin to function effectively.

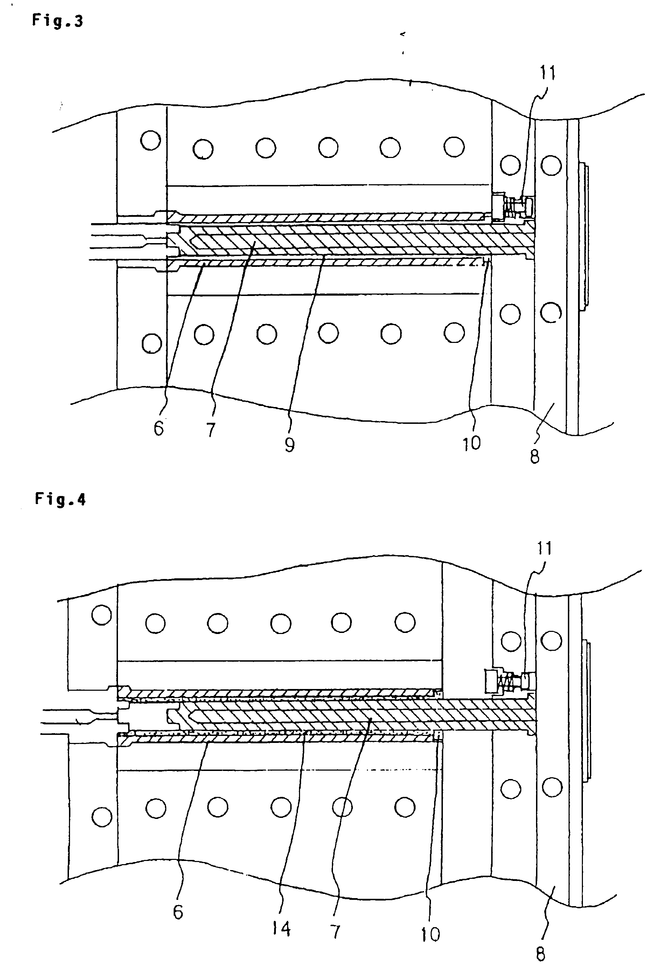

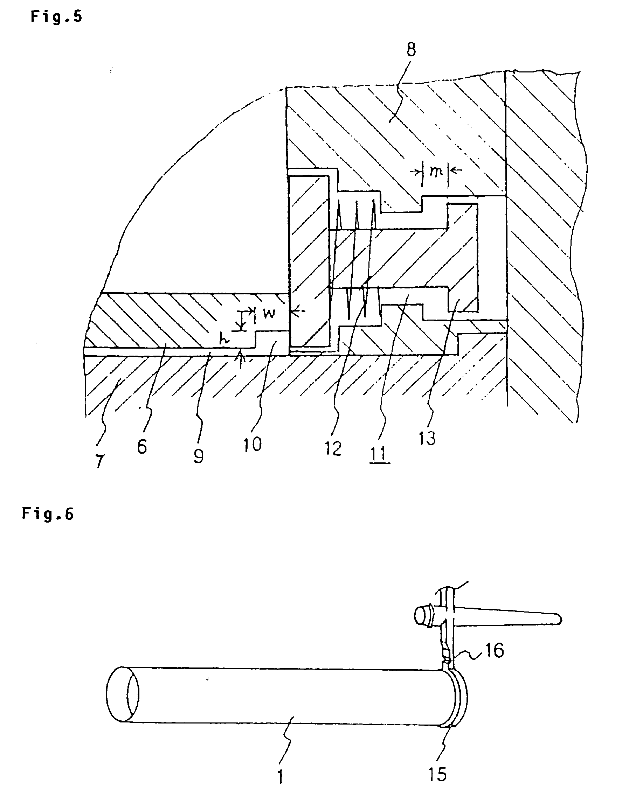

Next, the effects of the metal mold used to manufacture the supporting body in accordance with this invention are described with reference to the drawings. Figures 3 through 5 are partially sectional views describing an embodiment of the metal mold in accordance with this invention. Figure 3 shows the closing condition in which the end face of a cavity mold 6 contacts firmly to the end face of a fixed mold 8, wherein reference numeral 7 designates a core mold and reference numeral 9 is a cavity into which a molding material is filled and molded. Figure 4 shows the opening condition in which the cavity mold 6 and the fixed mold 8 are separated after molding. Reference numeral 14 designates a molded product. The core mold 7 is fitted into the fixed mold 8 and fixed thereto. Figure 5 is a partially enlarged sectional view of a spring knock 11 and its periphery in Figure 3. Reference numeral 12 designates a spring, while reference numeral 13 designates a knockout pin.

A stage section 10 is formed inside of the end face of the cavity mold 6 that contacts the fixed mold 8. (h) in the stage section 10 shown in Figure 5 should preferably be 1 to 3 mm and (w) should be 2 to 5 mm. In the closing condition shown in Figure 3, when a molding material is filled into the cavity 9 via this stage section 10 using side gate method, the material fills the stage section 10 and then the thin cylinder-like cavity 9, allowing the cavity 9 to be filled quickly, and circumferentially uniformly up to its tip of cavity 9 without producing defects such as a weld line. A gas vent is preferably provided at the tip of the cavity 9, and if desired, vacuum venting is preferably enabled to fill a molding material quickly in 0.05 to 2.5 second. The inside of the cavity mold 6 is electroformed with a nickel alloy to allow the molded product to be molded and released properly, and its surface roughness is finished to be 1 µm or less at the maximum height (Rₘₐₓ). The use of the cavity mold 6 with such surface conditions to fill and solidify a material in the cavity 9 at a sufficient injection pressure results in an injection-molded supporting body whose surface roughness is 1 µm or less at the maximum height (Rₘₐₓ).

A uniform outer diameter is required for a photo-sensitive body, and a draft angle must not be applied in the outer diameter of a molded product. Such molded products, in particular, those with a small thickness are difficult to release from the cavity mold 6 without damaging their surface. The surface of the core mold 7 is finished to be smooth so that its surface roughness is 1 µm or less at the maximum height (Rₘₐₓ). A draft angle within a range of 0.15° to 0.25° is provided on one side. The fixed mold 8 is provided with at least three spring knocks 11 comprising knockout pin 13 and a spring 12 at its end face opposite to the circumference of the end face of the cavity mold 6. This configuration causes the spring 12 compressed during closing as shown in Figure 5 to extend upon opening, thereby causing the tip of the knockout pin 13 to protrude from the end face of the fixed mold 8 as shown in Figure 4. The length by which the tip of the knockout pin protrudes from the end face is (m) shown in Figure 5. Thus, when the fixed mold 8 is separated from the cavity mold 6 and opened after molding, the tip of the knockout pin 13 continues pushing the end faces of the cavity mold 6 and molded product until the two molds 6 and 8 are separated by the distance equal to length (m). The cavity mold 6 and the molded product 14 thus move integrally, and, after opening, the molded product 14 is detached from the core mold 7 and remains fixed to the cavity mold 6, as shown in Figure 4. Since the core mold 7 has a draft angle and its surface is finished to be smooth, the core mold 7 can be pulled out smoothly from the molded product 14. Once the core mold has been pulled out, the molded product 14 contracts diametrally, allowing the molded product 14 to be, for example, knocked out from the cavity mold 6 without damaging its surface. If the draft angle of the core mold 7 is less than 0.15° on one side, the core mold is difficult to remove; if the draft angle is more than 0.25° on one side, the thickness of the thinner end of the supporting body, which is a molded product, will be too small to carry out molding if the supporting body is about 3 mm or less in thickness. For example, when the draft angle is 0.25° on one side and a supporting body of 30 mm in OD, 300 mm in length, and 1.5 to 3 mm in thickness of the thicker end is used, the thickness of the thinner end will be 0.3 to 0.6 mm if the thickness of the thicker end is 1.5 to 3 mm, making molding very difficult. The draft angle should thus be within a range of 0.15° to 0.25° on one side.

Figure 6 is a perspective view illustrating a molded product removed from the metal mold, wherein a ring-like projection 15 is formed at one end of the cylindrical supporting body 1 so as to correspond to the stage section 10 of the cavity mold 6. Reference numeral 16 designates a side gate.

### [Embodiments]

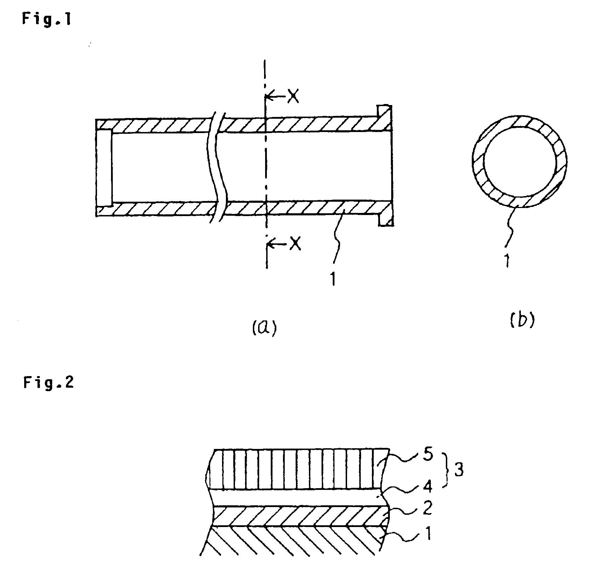

Figure 1 is a typical cross-sectional view of an embodiment of supporting body for a photo-sensitive body in accordance with this invention. Figure 1(a) is a longitudinal section of a supporting body 1, and Figure 1(b) is a cross-sectional view taken along line X-X of Figure 1(a). Figure 2 is a typical cross-sectional view illustrating the configuration of the layers of an embodiment of photo-sensitive body. In this figure, a sensitive layer 3 is formed by laminating via an under-layer 2 an electric charge generation layer 4 and an electric charge transport layer 5 in this order on the supporting body 1 shown in Figure 1. The under-layer 2 is not always necessary but is provided when needed.

### Embodiment 1

Using materials 1-1 to 1-4 of the compositions shown in Table 2 and a metal mold shown in Figures 3 to 5, supporting bodies 1 to 3 were formed by injection-molding under the same molding conditions, while a supporting body 4 was formed by injection-molding at a different metal mold temperature using a material 1-4 composed of a linear-type PPS resin. The injection-molding was carried out using a draft angle of about 0.23° on one side to obtain supporting bodies with an outer diameter of 30 mm, a length of 260.5 mm, and an inner diameter of 28.5 mm for the thinner end and 26.5 mm for the thicker end.

**Table 2**

| Raw material | Raw material brand | Compounding ratio (wt.%) | | | |
|---|---|---|---|---|---|
| | | Material 1-1 | Material 1-2 | Material 1-3 | Material 1-4 |
| Crosslinked-type PPS resin | Toray PPS M2900 (MFR:600) | 60 | - | - | - |
| | Toray PPS M3910 (MFR:2000) | - | 50 | 50 | - |
| Linear-type PPS resin | | - | - | - | 50 |
| Carbon black | Cabot Furnace Carbon XC72 particle size: 30 nm | 15 | - | - | - |
| | Cabot Furnace Carbon BP-480 particle size:30 nm | - | 20 | 10 | 20 |
| Clay | Tsuchiya Kaoline SATINTONES | 10 | 15 | 25 | 15 |
| Glass fibres | Nihon Sheet Glass RES 03-TP76 diameter: about 20µm length: about 3mm | 15 | 15 | 15 | 15 |

**Table 3**

| Supporting body No. | 1-1 | 1-2 | 1-3 | 1-4 |
|---|---|---|---|---|
| Supporting body material | Material 1-1 | Material 1-2 | Material 1-3 | Material 1-4 |
| Cylinder temperature (°C) | | | | |
| rear | 280 | Same as the values on the left | Same as the values on the left | 280 |
| middle | 290 | | | 290 |
| front | 300 | | | 300 |
| Nozzle temperature (°C) | 310 | | | 300 |
| Metal mold temperature (°C) | 150 | | | 120 |
| Injection pressure (x 10⁸ N/m²) | 1.62 | | | 1.62 |
| Filling time (sec) | 0.1 | | | 0.1 |
| Cooling time (sec) | 30 | | | 30 |

The following photo-sensitive layers were formed on these supporting bodies under the same conditions to produce photo-sensitive bodies. That is, a coating liquid with 5 pts.wt. alcohol-soluble polyamide resin (manufactured by Toray Co., Ltd.; Amilan CM 8000) solved in 95 pts.wt. methanol was coated on a supporting body by a dipping method and then dried at 120°C for 15 minutes to form an under-layer 0,5 µm in thickness. A coating liquid formed by blending and dispersing 10 pts.wt. X-type non-metal phthalocyanine (manufactured by Dainippon Ink and Chemicals Inc.; FASTGEN BLUE 8120), 10 pts.wt. vinyl chloride resin (manufactured by Nippon Zeon Co., Ltd.; MR-110), 686 pts.wt. dichloromethane and 294 pts.wt. 1, 2 -dichloroethane in a mixer for one hour and further dispersing the mixture by a supersonic dispersing machine for 30 minutes, was coated on the under-layer by a dipping method and then dried at 80° C for 30 minutes to form a electric charge generation layer of approximately 0.5µm in film thickness. A coating liquid consisting of 100 pts.wt. hydrazone compound (manufactured by Fuji Electric Co., Ltd.) shown in structural formula (1), 100 pts.wt. polycarbonate resin (manufactured by Mitsubishi Gas Chemical Co., Ltd.; Iupilon PCZ), and 800 pts.wt. dichloromethane was coated on the electric charge generation layer by a dipping method and then dried at 90°C for one hour to form a electric charge transport layer of 0.2 µm in thickness, thereby producing a photo-sensitive body.

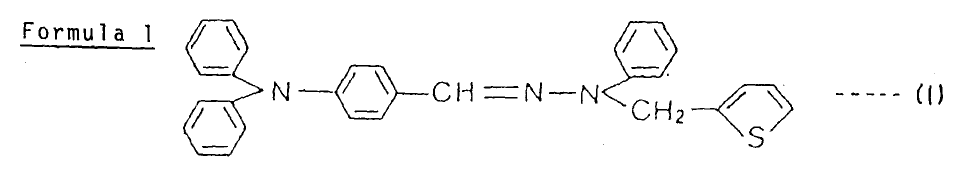

Table 4 shows the MFR at 300°C, volume resistivity, injection-moldability, mechanical strength, and chemical resistance (evaluated in terms of changes in mass during immersion in a methylene chloride for two hours) of the supporting body material, and the surface roughness (at the maximum height R_{MAX}), outer diameter accuracy, and change in dimensions measured after heating at 120°C for 48 hours each of supporting body, and the potential retaining rate Vₖ₅ measured after 5 seconds after charging in a dark place, residual potential Vᵣ measured after irradiation of 10 µJ/cm² with monochromatic light 780 nm in wavelength, and the printing characteristics evaluated by installing the sensitive body in a commercially available semiconductor laser printer of each photo-sensitive body.

**Table 4**

| | | | | |
|---|---|---|---|---|
| Sensitive body No. | 1-1 | 1-2 | 1-3 | 1-4 |
| Supporting body No. | 1-1 | 1-2 | 1-3 | 1-4 |
| MFR (g/10 min.) | 30 | 40 | 30 | 40 |
| Volume resistivity (Ω cm) | 2x10³ | 3x10² | 10⁶ | 3x10² |
| Injection moldability | good | good | good | nearly good |
| Mechanical strength (x 10⁸ N/m²) | 0.68 | 0.68 | 0.74 | 0.78 |
| Chemical resistance (%) | 10.5 | 10.1 | 10.1 | 12.4 |
| Surface roughness Rₘₐₓ (µm) | 0.9 | 0.8 | 0.8 | 0.8 |
| Outer diameter accuracy (mm) | 0.05 | 0.03 | 0.03 | 0.05 |
| Dimensional change rate (%) | 0 | 0 | 0 | -0.7 |
| Vₖ₅ (%) | 90 | 92 | 93 | 92 |
| Vᵣ (V) | 31 | 34 | 60 | 35 |
| Printing characteristics | good | good | bad | nearly good |

As can be seen from Table 4, the supporting body 1-4 using the material 1-4 composed of a linear-type PPS resin as a main component has inferior chemical resistance than that of the supporting bodies 1-1, 1-2, and 1-3 using the materials 1-1, 1-2, and 1-3 respectively composed of a crosslinked-type PPS resin as a main component, while it has a larger dimensional change rate than that of the supporting bodies 1-1, 1-2, and 1-3. In addition, the photo-sensitive body 1-3 using the supporting body 1-3 with a high volume resistivity of 10⁶ Ω cm has bad printing characteristics. It is obvious that supporting bodies consisting of a material comprising a crosslinked-type PPS resin as a main component and having volume resistivity of 10⁴ Ω cm or less can produce good effects.

### Embodiment 2

An ultraviolet ray irradiation device (SUV200NS) manufactured by Sen Engineering Co., Ltd. was used to irradiate the surface of the supporting body 1-1 described in Embodiment 1 with ultraviolet rays 184.9 and 253.7 nm in wavelength from a 200 W low pressure mercury lamp, keeping a distance of 20 mm from the supporting body. The supporting body irradiated for 10 seconds was referred to as 2-1, while the supporting body irradiated for 20 seconds was referred to as 2-2.

In addition, corona discharge was induced on the surface of the supporting body 1-1 while it was being rotated (discharge voltage: about 10 kV; gap between a discharge electrode and the supporting body: 2 to 3 mm; and discharge time: 30 seconds). This supporting body was referred to as 2-3.

For comparison, the supporting body 1-1 on which ultraviolet ray irradiation corona discharge were not induced was referred to as 2-4.

The contact angle of the surface of these supporting bodies with respect to pure water was determined, and cross-cut adhesion tests (JIS K5400 8.5.1) were conducted to evaluate adhesion.

Each supporting body was used to produce photo-sensitive bodies 2-1, 2-2, 2-3, and 2-4 as in Embodiment 1. The photo-sensitive bodies were then installed in a commercially available semiconductor laser printer to evaluate their continuous printing life, that is, when their photo-sensitive layer starts being separated from the supporting body.

Table 5 shows the results.

**Table 5**

| | | | | |
|---|---|---|---|---|
| Sensitive body No. | 2-1 | 2-2 | 2-3 | 2-4 |
| Supporting body No. | 2-1 | 2-2 | 2-3 | 2-4 |
| Surface treatment ultraviolet ray irradiation (second) | 10 | 20 | - | - |
| corona discharge (second) | - | - | 30 | - |
| Contact angle (degree) | 32 | 0 | 0 | 78 |
| Cross-cut adhesion test (separations/100) | 85/100 | 0/100 | 0/100 | 100/100 |
| Continuous printing life (times) | 50.000 | 100.000 | 100.000 | 5.000 |

Table 5 clearly shows that the photo-sensitive bodies 2-1 and 2-2 using the supporting bodies 2-1 and 2-2 irradiated with ultraviolet rays and the photo-sensitive body 2-3 using the supporting body 2-3 on which corona discharge was induced were better in adhesion and continuous printing life than the photo-sensitive body 2-4 using the supporting body 2-4 on which no treatments were applied. For irradiation with ultraviolet rays from a 200 W low pressure mercury lamp, the results were particularly good when the irradiation time was 20 seconds. It can thus be estimated that the irradiation time is preferably 15 to 25 seconds.

### Embodiment 3

The material 1-3 in Table 2 and the metal mold in Figures 3 to 5 were used to carry out injection-molding at various metal mold temperatures as shown in Table 6 to produce supporting bodies 3-1, 3-2, and 3-3. The nozzle temperature was somewhat changed along with the variation of the metal mold temperature. For the supporting material 3-3, an increase in metal mold temperature results in a shorter material-filling time. Among the supporting bodies formed, the supporting body 3-3 was inadequate for practical use due to many burrs. The supporting bodies 3-1 and 3-2 were then used to produce photo-sensitive bodies 3-1 and 3-2 as in Embodiment 1 to determine their potential retaining rate Vₖ₅, residual potential Vᵣ and printing characteristics. Table 7 shows the results.

**Table 6**

| | | | |
|---|---|---|---|
| Supporting body No. | 3-1 | 3-2 | 3-3 |
| Cylinder temperature (°C) | | | |
| rear | 280 | 280 | 280 |
| middle | 290 | 290 | 290 |
| front | 300 | 300 | 300 |
| Nozzle temperature (°C) | 310 | 300 | 319 |
| Metal mold temperature (°C) | 150 | 100 | 170 |
| Injection pressure (x 10⁸ N/m²) | 1.62 | 1.62 | 1.57 |
| Filling time (sec) | 0.1 | 1.0 | 0.04 |
| Cooling time (sec) | 30 | 30 | 30 |

**Table 7**

| | | |
|---|---|---|
| Sensitive body No. | 3-1 | 3-2 |
| Vₖ₅ (%) | 92 | 93 |
| Vᵣ (V) | 34 | 55 |
| Printing characteristics | good | bad |

As is apparent from Tables 6 and 7, good supporting bodies cannot be obtained unless adequate injection-molding conditions are set even if the same material is used. Good results can be obtained when the metal mold temperature is 150°C, while printing is bad when this temperature is 100°C and many burrs are generated when this temperature is 170°C. It can be estimated that the metal mold temperatures is preferably higher than 100°C and lower than 170° C, and, more preferably, within a range of about 120° to about 160°C.

### [Advantages of the Invention]

With the above configuration, this invention has the following advantages:

The use of a material 10⁴ Ω cm in volume resistivity formed by blending a crosslinked-type PPS resin as a main component with a highly conductive carbon black 10⁻¹ Ω cm or less serves to provide an organic photo-sensitive body with a cylindrical supporting body that has a light weight, preferable conductivity, and good chemical and thermal resistance, can effectively maintain dimensional accuracy despite its thin and long shape, and is not deteriorated by oxidation in the air, thereby eliminating the need of a special treatment for surface stabilization.

Blending with a carbon black 20 to 50 nm in average particle diameter serves to provide an organic photo-sensitive body with a cylindrical supporting body that has a uniform surface roughness within a range of 0.5 to 1.2 µm at Rₘₐₓ. When the carbon black is added to the supporting body, a carbon black dispersing agent can preferably be added together to uniformly add the carbon black, thereby making the supporting body homogeneous and the surface roughness uniform.

The addition of glass fibers serves to provide an organic photo-sensitive body with a cylindrical supporting body that has a high mechanical strength and is difficult to deform despite its thin and long shape. Glass fibers about 20 µm in diameter and about 3 mm in length are preferable due to the lack of adverse effects on the surface roughness of the supporting body. The addition of various materials does not affect the favorable characteristics of the supporting body as long as at least 40 wt.% or more of the supporting body material is composed of a crosslinked-type PPS resin.

Irradiating the surface of the supporting body with ultraviolet rays 180 to 255 nm in wavelength or inducing corona discharge thereon serves to provide a long life organic photo-sensitive body with a cylindrical supporting body that has better adhesion and on which an organic material layer can be formed stably.

The above cylindrical supporting body can be manufactured efficiently by injection-molding a material 10⁴ Ω cm in volume resistivity formed by blending a crosslinked-type PPS resin as a main component with a highly conductive carbon black 10⁻¹ Ω cm or less in volume resistivity, or the above material wherein the average particle diameter of the carbon black is 20 to 50 nm or to which glass fibers are added.

The above molding material can be molded effectively and the crosslinked-type PPS resin is crystallized sufficiently to act favorably for the supporting body when the mold temperature is within a range of 120° to 150°C and the molding material temperature is within a range of 280° to 330°C. Completion of filling of a material in 0.05 to 2.5 seconds preferably serves to form efficiently a thin and long cylindrical supporting body. In the metal mold used, the core mold fitted into the fixed mold is finished to have a surface roughness of 1 µm or less at the maximum height (Rₘₐₓ) and a draft angle of 0.15° to 0.25° on one side; the inner surface of the cavity mold does not have a draft angle; is electroformed with a nickel alloy; is finished to have a surface roughness of 1 µm or less at the maximum height (Rₘₐₓ); and has inside its end face that contacts the fixed mold a stage section via which a material is filled using a side gate method; the fixed mold is provided with at least three spring knocks at its end face opposite to the end face of the cavity mold to ensure that when the mold is opened after molding, the injection-molded product remains in the cavity mold due to the effect of the spring knock. The use of a metal mold of this configuration serves to easily reduce the molding material filling time down to 0.05 seconds, allows the molding material to be uniformly filled circumferentially up to the tip of the cavity before the material starts to be solidified, and enables thin and long supporting bodies to be formed adequately. Supporting bodies 1 µm in surface roughness at the maximum height (Rₘₐₓ) can also be obtained corresponding to the roughness of the inner surface of the cavity mold. When the mold is opened after injection-molding, the core mold can be pulled out smoothly from the molded product due to its draft angle, which can then be, for example, knocked out from the cavity mold without damaging its surface.

### [Brief Description of the Drawings]

Figure 1 is a typical sectional view of an embodiment of a supporting body in accordance with this invention; Figure 1(a) is a longitudinal section, while Figure 1(b) is a cross-sectional view taken along line X-X of Figure 1(a).

Figure 2 is a typical sectional view of an embodiment of a sensitive body in accordance with this invention.

Figure 3 is a partially sectional view of the closing condition describing an embodiment of a metal mold in accordance with this invention.

Figure 4 is a partially sectional view of the opening condition describing an embodiment of a metal mold in accordance with this invention.

Figure 5 is a partially enlarged sectional view of a spring knock section and its periphery in Figure 3.

Figure 6 is a perspective view illustrating a molded product removed from the metal mold.

### [Description of Symbols]

- 1: Supporting body
- 2: Under-layer
- 3: Sensitive layer
- 4: Electric charge generation layer
- 5: Electric charge transport layer
- 6: Cavity mold
- 7: Core mold
- 8: Fixed mold
- 9: Cavity
- 10: Stage section
- 11: Spring knock
- 12: Spring
- 13: Knockout pin
- 14: Molded product
- 15: Ring-like projection
- 16: Side gate

## Claims

1. An organic photo-sensitive body for electrophotography comprising an organic photo-sensitive layer (3) on a cylindrical supporting body (1), composed of a conductive polyphenylene sulfide resin material containing carbon black, **characterized in that** the conductive polyphenylene sulfide resin material has a volume resistivity of 10⁴Ω cm and is formed by blending a crosslinked-type polyphenylene sulfide resin as a main component with a highly conductive carbon black having a volume resistivity of not more than 10⁻¹Ω cm.

2. Organic photo-sensitive body for electrophotography acccording to claim 1, wherein the average particle diameter of the carbon black contained in the cylindrical supporting body (1) is 20 to 50 nm.

3. Organic photo-sensitive body for electrophotography according to claim 1 or 2, wherein the cylindrical supporting body (1) contains a carbon black dispersing agent.

4. Organic photo-sensitive body for electrophotography according to claim 3 wherein the dispersing agent is a calcium carbonate or clay.

5. Organic photo-sensitive body for electrophotography according to any of claims 1 to 4, wherein the cylindrical supporting body (1) contains glass fibres as a reinforcement.

6. Organic photo-sensitive body for electrophotography according to any of claims 1 to 5, wherein the amount of the crosslinked-type polyphenylene sulfide resin contained in the cylindrical supporting body (1) is at least 40 wt.%.

7. Organic photo-sensitive body for electrophotography according to any of claims 1 to 6, wherein the radial thickness of the cylindrical supporting body (1) is no more than 3 mm at a thicker end and no less than 0,6 mm at a thinner end thereof.

8. Manufacturing method of a cylindrical supporting body (1) for an organic photo-sensitive layer for electrophotography according to any of claims 1 to 7, **characterized in that** a material having 10⁴Ω cm volume resistivity and formed by blending a crosslinked-type polyphenylene sulfide resin as main component with a highly conductive carbon black having a volume resistivity not higher than 10⁻¹Ω cm is injected into a metal mold (6, 7) for the cylindrical supporting body (1).

9. The manufacturing method of claim 8 wherein the metal mold (6, 7) for injection molding is heated within a range of 120 to 150°C.

10. The manufacturing method of claim 8 or 9 wherein the filling time of the injection-molding material is within the range of 0,05 to 2,5 seconds.

11. The manufacturing method of any of claims 8 to 10 wherein the surface of the formed cylindrical supporting body (1) is irradiated with ultraviolet rays 180 to 255 nm in wavelength before forming a photo-sensitive layer (2, 3) thereon.

12. The manufacturing method of any of claims 8 to 10 wherein a corona discharge treatment is induced on the surface of the formed cylindrical supporting body (1) before forming a photo-sensitive layer (2, 3) thereon.

13. The manufacturing method of a cylindrical supporting body (1) of any of claims 8 to 12, **characterized in that** the metal mold comprises a core mold (7) which is finished to have a surface roughness of 1 µm or less at the maximum height (Rₘₐₓ) and a draft angle not less than 0,15 °on one side and so that the radial space between the core mold (7) and the cavity mold (6) wherein the cylindrical supporting body (1) is formed is not less than 0,6 mm at one end and no more than 3 mm at the other end of the cavity mold (6), the inner surface of which does not have a draft angle, is electroformed with a nickel alloy, is finished to have a surface roughness of 1 µm or less at the maximum height (Rₘₐₓ) and has inside of the end face that contacts a fixed mold (8) a stage section (10) via which the material for forming the cylindrical supporting body is filled using a side gate method, and wherein the fixed mold (8) is provided with at least three spring knocks (11) at its end face opposite to the circumference of the end face of the cavity mold (6) to ensure that when the mold (6, 7) is opened, the injection molded product (1) remains in the cavity mold (6) due to the effect of the spring knocks (11).

## Patentansprüche

1. Organischer lichtempfindlicher Körper für Elektrofotografie mit einer organischen lichtempfindlichen Schicht (3) auf einem zylindrischen Trägerkörper (1), der aus einem Ruß enthaltenden leitenden Polyphenylensulfidharzmaterial besteht, **dadurch gekennzeichnet, daß** das leitende Polyphenylensulfidharzmaterial einen spezifischen Volumenwiderstand von 10⁴ Ωcm hat und gebildet ist durch Mischen eines vernetzten Polyphenylensulfidharzes als Hauptbestandteil mit einem hochleitfähigen Ruß mit einem spezifischen Volumenwiderstand von nicht mehr als 10⁻¹ Ωcm.

2. Organischer lichtempfindlicher Körper für Elektrofotografie nach Anspruch 1, worin der durchschnittliche Teilchendurchmesser des im zylindrischen Trägerkörper (1) enthaltenen Ruß 20 bis 50 nm beträgt.

3. Organischer lichtempfindlicher Körper für Elektrofotografie nach Anspruch 1 oder 2, worin der zylindrische Trägerkörper (1) ein Rußdispergierungsmittel enthält.

4. Organischer lichtempfindlicher Körper für Elektrofotografie nach Anspruch 3, worin das Dispergierungsmittel ein Calciumcarbonat oder Ton ist.

5. Organischer lichtempfindlicher Körper für Elektrofotografie nach einem der Ansprüche 1 bis 4, worin der zylindrische Trägerkörper (1) Glasfasern als Verstärkung enthält.

6. Organischer lichtempfindlicher Körper für Elektrofotografie nach einem der Ansprüche 1 bis 5, worin die Menge des im zylindrischen Trägerkörpers (1) enthaltenen vernetzten Polyphenylensulfidharzes wenigstens 40 Gew.-% beträgt.

7. Organischer lichtempfindlicher Körper für Elektrofotografie nach einem der Ansprüche 1 bis 6, worin die radiale Dicke des zylindrischen Trägerkörpers (1) an einem dickeren Ende desselben nicht mehr als 3 mm und an einem dünneren Ende desselben nicht weniger als 0,6 mm beträgt.

8. Verfahren zur Herstellung eines zylindrischen Trägerkörpers (1) für eine organische lichtempfindliche Schicht für Elektrofotografie nach einem der Ansprüche 1 bis 7, **dadurch gekennzeichnet, daß** ein Material mit einem spezifischen Volumenwiderstand von 10⁴ Ωcm, das durch Mischen eines vernetzten Polyphenylensulfidharzes als Hauptbestandteil mit einem hochleitfähigen Ruß mit einem spezifischen Volumenwiderstand von nicht mehr als 10⁻¹ Ωcm gebildet wurde, in eine Metallform (6, 7) für den zylindrischen Trägerkörper (1) injiziert wird.

9. Herstellungsverfahren nach Anspruch 8, worin die Metallform (6, 7) für das Einspritzformen auf einen Bereich von 120 bis 150°C erhitzt wird.

10. Herstellungsverfahren nach Anspruch 8 oder 9, worin die Füllzeit des eingespritzten zu formenden Materials im Bereich von 0,05 bis 2,5 Sekunden liegt.

11. Herstellungsverfahren nach einem der Ansprüche 8 bis 10, worin die Oberfläche des geformten zylindrischen Trägerkörpers (1) mit ultravioletten Strahlen von 180 bis 255 nm Wellenlänge bestrahlt wird, bevor eine lichtempfindliche Schicht (2, 3) darauf gebildet wird.

12. Herstellungsverfahren nach einem der Ansprüche 8 bis 10, worin eine Corona-Entladungsbehandlung auf der Oberfläche des gebildeten zylindrischen Trägerkörpers induziert wird, bevor darauf eine lichtempfindliche Schicht (2, 3) gebildet wird.

13. Verfahren zur Herstellung eines zylindrischen Trägerkörpers (1) nach einem der Ansprüche 8 bis 12, **dadurch gekennzeichnet, daß** die Metallform eine Kernform (7) aufweist, die so poliert ist, daß sie eine Oberflächenrauhigkeit von 1 µm oder weniger bei der maximalen Höhe (Rₘₐₓ) und eine Formschräge von nicht weniger als 0,15° auf einer Seite und dergestalt aufweist, daß der radiale Raum zwischen dem Formkern (7) und der Hohlform (6), worin der zylindrische Trägerkörper (1) gebildet wird, nicht weniger als 0,6 mm an einem Ende und nicht mehr als 3 mm am anderen Ende der Hohlform (6) beträgt, deren Innenfläche keine Formschräge aufweist, mit einer Nickel-Legierung galvanisch geformt und auf eine Oberflächenrauhigkeit von 1 µm oder weniger bei der maximalen Höhe (Rₘₐₓ) poliert ist und innerhalb der Endfläche, die eine feststehende Form (8) berührt, einen Stufenabschnitt (10) aufweist, durch den das den zylindrischen Trägerkörper bildende Material unter Verwendung einer Seiten-Angußmethode gefüllt wird und worin die feststehende Form (8) an ihrer Endfläche gegenüber dem Umfang der Endfläche der Hohlform (6) mit wenigstens drei federbelasteten Stößeln (11) versehen ist, um sicherzustellen, daß beim Öffnen der Form (6, 7) das durch Spritzguß geformte Produkt (1) unter der Wirkung der federbelasteten Stößel (11) in der Hohlform (6) verbleibt.

## Revendications

1. Corps photosensible en matière organique destiné à l'électrophotographie, comprenant une couche (3) photosensible de matière organique située sur un corps cylindrique (1) de support, constitué d'un matériau à base de résine conductrice de sulfure de polyphénylène contenant du noir de carbone, **caractérisé en ce que** le matériau à base de résine conductrice de sulfure de polyphénylène a une résistivité volumique de 10⁴ Ω cm et est constitué d'un mélange de résine de sulfure de polyphénylène du type réticulé, en tant que composant principal, et d'un noir de carbone fortement conducteur doté d'une résistivité volumique qui n'est pas supérieure a 10⁻¹ Ω cm.

2. Corps photosensible en matière organique destiné à l'électrophotographie selon la revendication 1, dans lequel le diamètre moyen des particules du noir de carbone contenu dans le corps cylindrique de support (1) est de 20 à 50 nm.

3. Corps photosensible en matière organique destiné à l'électrophotographie selon la revendication 1 ou 2, dans lequel le corps cylindrique de support (1) contient un agent de dispersion du noir de carbone.

4. Corps photosensible de matière organique destiné à l'électrophotographie selon la revendication 3, dans lequel l'agent de dispersion est du carbonate de calcium, ou de l'argile.

5. Corps photosensible de matière organique destiné à l'électrophotographie selon l'une quelconque des revendications 1 à 4, dans lequel le corps cylindrique de support (1) contient des fibres de verre de renfort.

6. Corps photosensible de matière organique destiné à l'électrophotographie selon l'une quelconque des revendications 1 à 5, dans lequel la quantité de résine de sulfure de polyphénylène du type réticulé contenue dans le corps cylindrique de support (1) est au moins de 40 % en poids.

7. Corps photosensible de matière organique destiné à l'électrophotographie selon l'une quelconque des revendications 1 à 6, dans lequel l'épaisseur radiale du corps cylindrique de support (1) n'est pas supérieure à 3 mm à l'extrémité la plus épaisse et non inférieure à 0,6 mm à l'extrémité la plus mince de celui-ci.

8. Procédé de fabrication d'un corps cylindrique de support (1) destiné à une couche photosensible en matière organique servant à l'électrophotographie, selon l'une quelconque des revendications 1 à 7, **caractérisé en ce qu'**un matériau doté d'une résistivité volumique de 10⁴ Ω cm et réalisé en mélangeant une résine de sulfure de polyphénylène du type réticulé, en tant que composant principal, et du noir de carbone fortement conducteur doté d'une résistivité volumique qui n'est pas supérieure à 10⁻¹ Ω cm, est injecté dans un moule métallique (6, 7) de corps cylindrique de support (1).

9. Procédé de fabrication selon la revendication 8, dans lequel le moule métallique (6, 7) de moulage par injection est chauffé à une température comprise entre 120 et 150°C.

10. Procédé de fabrication selon la revendication 8 ou 9, dans lequel le temps de remplissage par le matériau de moulage par injection est compris entre 0,05 et 2,5 secondes.

11. Procédé de fabrication selon l'une quelconque des revendications 8 à 10, dans lequel la surface du corps cylindrique de support (1) réalisé est irradiée au moyen de rayons ultraviolets d'une longueur d'onde de 180 à 255 nm avant la réalisation de la couche photosensible (2, 3) sur celle-ci.

12. Procédé de fabrication selon l'une quelconque des revendications 8 à 10, dans lequel un traitement par décharge corona est appliqué sur la surface du corps cylindrique de support (1) réalisé avant l'application de la couche photosensible (2, 3) sur celle-ci.

13. Procédé de fabrication d'un corps cylindrique de support (1) selon l'une quelconque des revendications 8 à 12, **caractérisé en ce que** le moule métallique comprend un moule à noyau (7) dont la finition est exécutée de manière à ce qu'il présente une rugosité de surface de 1 µm, ou moins, à la hauteur maximum (Rₘₐₓ) et un angle de démoulage qui n'est pas inférieur à 0,15° d'un côté, et de telle sorte que l'espace radial entre le moule à noyau (7) et le moule à cavité (6), dans lequel est moulé le corps cylindrique de support (1), n'est pas inférieur à 0,6 mm à l'une des extrémités et n'est pas supérieur à 3 mm à l'autre extrémité, le moule *à* cavité (6) dont la surface intérieure ne présente pas d'angle de démoulage, est obtenu par électrodéposition d'un alliage de nickel, sa finition étant faite de manière à ce qu'il présente une rugosité de surface de 1 µm, ou moins, à la hauteur maximum (Rₘₐₓ) et il comporte, à l'intérieur de sa face d'extrémité qui est en contact avec le moule fixe (8), une section étagée (10) par l'intermédiaire de laquelle le matériau destiné à la réalisation du corps cylindrique de support (1) est introduit en utilisant le procédé d'injection par orifice latéral, et dans lequel le moule fixe (8) est muni d'au moins trois poussoirs (11) à ressort sur sa face d'extrémité située en face de la circonférence de la face d'extrémité du moule à cavité (6), afin de garantir que lorsque le moule (6, 7) est ouvert, le produit moulé par injection (1) reste dans le moule à cavité (6) en raison de l'effet des poussoirs (11) à ressort.
